(19) Europäisches Patentamt
European Patent Office
Office européen des brevets

(11) **EP 0 873 617 B1**

(12) **EUROPEAN PATENT SPECIFICATION**

(45) Date of publication and mention
of the grant of the patent:
**03.01.2007 Bulletin 2007/01**

(21) Application number: **96944186.4**

(22) Date of filing: **18.10.1996**

(51) Int Cl.:
*H04L 9/08* (2006.01)    *H04L 9/32* (2006.01)

(86) International application number:
**PCT/US1996/016608**

(87) International publication number:
**WO 1998/018234 (30.04.1998 Gazette 1998/17)**

(54) **KEY AGREEMENT AND TRANSPORT PROTOCOL WITH IMPLICIT SIGNATURES**

VERFAHREN ZUR SITZUNGSSCHLÜSSELERZEUGUNG MIT IMPLIZITEN UNTERSCHRIFTEN

PROTOCOLE D'ACCORD DE CLE ET DE TRANSPORT AVEC SIGNATURES IMPLICITES

(84) Designated Contracting States:
**CH DE FR GB LI**

(43) Date of publication of application:
**28.10.1998 Bulletin 1998/44**

(73) Proprietor: **Certicom Corp.**
**Mississauga,**
**Ontario L5R 3L7 (CA)**

(72) Inventors:
• **VANSTONE, Scott, A.**
**Waterloo, Ontario N2T 2H4 (CA)**
• **MENEZES, Alfred, John**
**Auburn, AL 36830 (US)**
• **QU, Mingua**
**Waterloo, Ontario N2L 3E5 (CA)**

(74) Representative: **Barnfather, Karl Jon et al**
**Withers & Rogers LLP**
**Goldings House,**
**2 Hays Lane**
**London SE1 2HW (GB)**

(56) References cited:
**EP-A- 0 393 806**      **EP-A- 0 639 907**
**DE-A- 3 915 262**

• **ADVANCES IN CRYPTOLOGY - ASIACRYPT'94. 4TH INTERNATIONAL CONFERENCE ON THE THEORY AND APPLICATIONS OF CRYPTOLOGY, WOLLONGONG (AUS), ISBN 3-540-59339-X, 1995, BERLIN, GERMANY, SPRINGER-VERLAG, GERMANY, pages 171-181, XP000527595 BOYD C ET AL: "Design and analysis of key exchange protocols via secure channel identification"**
• **Matsumoto T.; Takashima Y.; Imai H.: On Seeking Smart Public-Key-Distribution Systems, The Transactions of the IECE of Japan, E69: 99-106, 1986, XP002056002**

## Description

The present invention relates to key agreement protocols for transfer and authentication of encryption keys.

To retain privacy during the exchange of information it is well known to encrypt data using a key. The key must be chosen so that the correspondents are able to encrypt and decrypt messages but such that an interceptor cannot determine the contents of the message.

In a secret key cryptographic protocol, the correspondents share a common key that is secret to them. This requires the key to be agreed upon between the correspondents and for provision to be made to maintain the secrecy of the key and provide for change of the key should the underlying security be compromised.

Public key cryptographic protocols were first proposed in 1976 by Diffie-Hellman and utilized a public key made available to all potential correspondents and a private key known only to the intended recipient. The public and private keys are related such that a message encrypted with the public key of a recipient can be readily decrypted with the private key but the private key cannot be derived from the knowledge of the plaintext, ciphertext and public key.

Key establishment is the process by which two (or more) parties establish a shared secret key, called the session key. The session key is subsequently used to achieve some cryptographic goal, such as privacy. There are two kinds of key agreement protocol; key transport protocols in which a key is created by one party and securely transmitted to the second party; and key agreement protocols, in which both parties contribute information which jointly establish the shared secret key. The number of message exchanges required between the parties is called the number of passes. A key establishment protocol is said to provide implicit key authentication (or simply key authentication) if one party is assured that no other party aside from a specially identified second party may learn the value of the session key. The property of implicit key authentication does not necessarily mean that the second party actually possesses the session key. A key establishment protocol is said to provide key confirmation if one party is assured that a specially identified second party actually has possession of a particular session key. If the authentication is provided to both parties involved in the protocol, then the key authentication is said to be mutual; if provided to only one party, the authentication is said to be unilateral.

There are various prior proposals which claim to provide implicit key authentication.

Examples include the Nyberg-Rueppel one-pass protocol and the Matsumoto-Takashima-Imai (MTI) and the Goss and Yacobi two-pass protocols for key agreement. The Nyberg-Rueppel protocol and the MTI protocol are described in EP 0 639 907 and MATSUMOTO, T., TAKASHIMA, Y., and IMAI, H.: On Seeking Smart Public-Key-Distribution Systems, The Transactions of the IECE of Japan, E69: 99-106, 1986. The Goss protocol is described in U.S. Patent No. 4,956,865. The Yacobi protocol is described in Y. Yacobi, "A Key Distribution Paradox," Advances in Cryptology, Crypto '90, Lecture Notes in Computer Science 537, Springer-Verlag, 1991, pp. 268 to 273.

The prior proposals ensure that transmissions between correspondents to establish a common key are secure and that an interloper cannot retrieve the session key and decrypt the ciphertext. In this way security for sensitive transactions such as transfer of funds is provided.

For example, the MTI/AO key agreement protocol establishes a shared secret K, known to the two correspondents, in the following manner:-

1. During initial, one-time setup, key generation and publication is undertaken by selecting and publishing an appropriate system prime $p$ and generator $\alpha \in Z_p^*$ in a manner guaranteeing authenticity. Correspondent A selects as a long-term private key a random integer "a",$1<a<p-1$, and computes a long-term public key $z_A = \alpha^a \bmod p$. B generates analogous keys b, $z_B$. A and B have access to authenticated copies of each other's long-term public key.

2. The protocol requires the exchange of the following messages.

$$A \rightarrow B: \alpha^{\mathbf{x}} \bmod p \quad (1)$$

$$A \leftarrow B: \alpha^{\mathbf{y}} \bmod p \quad (2)$$

The values of x and y remain secure during such transmissions as it is impractical to determine the exponent even when the value of a and the exponentiation is known provided of course that p is chosen sufficiently large.

3. To implement the protocol the following steps are performed each time a shared key is required.

(a) A chooses a random integer x,$1 \leq x \leq p-2$, and sends B message (1) i.e. $\alpha^x \bmod p$.

(b) B chooses a random integer y, $1 \leq y \leq p-2$, and sends A message (2) i.e. $\alpha^y \bmod p$.

(c) A computes the key K = $(\alpha^y)^a z_B{}^x \bmod p$.

(d) B computes the key K = $(\alpha^x)^b Z_A{}^y \bmod p$.

(e) Both share the key K = $\alpha^{bx+ay}$.

In order to compute the key K, A must use his secret key a and the random integer x, both of which are known only to him. Similarly B must use her secret key b and random integer y to compute the session key K.

Provided the secret keys a,b remain uncompromised, an interloper cannot generate a session key identical to the other correspondent. Accordingly, any ciphertext will not be decipherable by both correspondents.

EP 0 639 907 describes a key agreement method. User A has a private key agreement key $s_A$. User B has a public key agreement key $k_B$ corresponding to the private key agreement key $s_B$ through the rule $k_B = g^{-S_B} \bmod p$.

As such this and related protocols have been considered satisfactory for key establishment and resistant to conventional eavesdropping or man-in-the-middle attacks.

In some circumstances it may be advantageous for an adversary to mislead one correspondent as to the true identity of the other correspondent.

In such an attack an active adversary or interloper E modifies messages exchanged between A and B, with the result that B believes that he shares a key K with E while A believes that she shares the same key K with B. Even though E does not learn the value of K the misinformation as to the identity of the correspondents may be useful.

A practical scenario where such an attack may be launched successfully is the following. Suppose that B is a bank branch and A is an account holder. Certificates are issued by the bank headquarters and within the certificate is the account information of the holder. Suppose that the protocol for electronic deposit of funds is to exchange a key with a bank branch via a mutually authenticated key agreement. Once B has authenticated the transmitting entity, encrypted funds are deposited to the account number in the certificate. If no further authentication is done in the encrypted deposit message (which might be the case to save bandwidth) then the deposit will be made to E's account.

It is therefore an object of the present invention to provide a protocol in which the above disadvantages are obviated or mitigated.

According therefore to the present invention there is provided a method of authenticating a key established between a pair of correspondents as described in the appended claims.

Thus although the interloper E can substitute her public key $p_E = \alpha^{ae}$ in the transmission as part of the message, B will use $p_E$ rather than $p_A$ when authenticating the message. Accordingly the computed and transmitted values of the exponential functions will not correspond.

Embodiments of the invention will now be described by way of example only with reference to the accompanying drawings in which:-

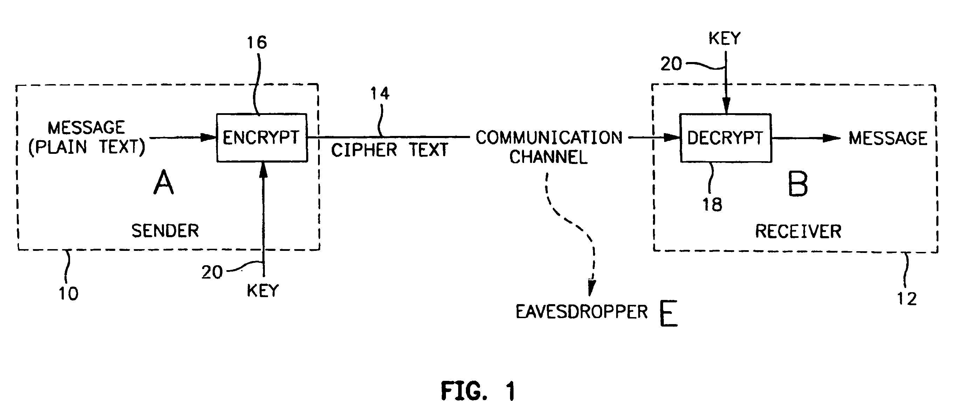

Figure 1 is a schematic representation of a data communication system.

Referring therefore to Figure 1, a pair of correspondents, 10,12, denoted as correspondent A and correspondent B, exchange information over a communication channel 14. A cryptographic unit 16,18 is interposed between each of the correspondents 10,12 and the channel 14. A key 20 is associated with each of the cryptographic units 16,18 to convert plaintext carried between each unit 16,18 and its respective correspondent 10,12 into ciphertext carried on the channel 14.

In operation, a message generated by correspondent A, 10, is encrypted by the unit 16 with the key 20 and transmitted as ciphertext over channel 14 to the unit 18.

The key 20 operates upon the ciphertext in the unit 18 to generate a plaintext message for the correspondent B, 12. Provided the keys 20 correspond, the message received by the correspondent 12 will be that sent by the correspondent 10.

In order for the system shown in Figure 1 to operate it is necessary for the keys 20 to be identical and therefore a key agreement protocol is established that allows the transfer of information in a public manner to establish the identical keys. A number of protocols are available for such key generation and are variant of the Diffie-Hellman key exchange. Their purpose is for parties A and B to establish a secret session key K.

The system parameters for these protocols are a prime number p and a generator a of the multiplicative group $Z_p^{\bullet}$. Correspondent A has private key a and public key $p_A = \alpha^a$. Correspondent B has private key b and public key $p_B = \alpha^b$. In the protocol exemplified below, $text_A$ refers to a string of information that identifies party A. If the other correspondent B possesses an authentic copy of correspondent A's public key, then $text_A$ will contain A's public-key certificate, issued by a trusted center; correspondent B can use his authentic copy of the trusted center's public key to verify correspondent A's certificate, hence obtaining an authentic copy of correspondent A's public key.

In each example below it is assumed that, an interloper E wishes to have messages from A identified as having originated from E herself. To accomplish this, E selects a random integer e, $1 \le e \le p-2$, computes $p_E = (p_A)^e = \alpha^{ae} \bmod p$, and gets this certified as her public key. E does not know the exponent ae, although she knows e. By substituting $text_E$ for $text_A$, the correspondent B will assume that the message originates from E rather than A and use E's public key to generate the session key K. E also intercepts the message from B and uses his secret random integer e to modify its contents. A will then use that information to generate the same session key allowing A to communicate with B.

To avoid interloper E convincing B that he is communicating with E, the following protocol is adapted.

The purpose of the protocol is for parties A and B to establish a session key K. The protocols exemplified are role-symmetric and non-interactive. The protocols labelled First Protocol, Modified First Protocol, Second Protocol, Third Protocol, and Key Transport Protocol are presented to show general concepts, but these particular protocols are not part of the invention presently claimed.

The system parameters for this protocol are a prime number p and a generator a of the multiplicative group $Z_p^*$. User A has private key a and public key $p_A = \alpha^a$. User B has private key b and public key $p_B = \alpha^b$.

First Protocol

1. A picks a random integer x,$1 \leq x \leq p-2$, and computes $r_A = \alpha^x$ and a signature $s_A = x - r_A a \mod (p-1)$. A sends $\{r_A, S_A, \text{text}_A\}$ to B.
2. B picks a random integer y,$1 \leq y \leq p-2$, and computes $r_B = \alpha^y$ and a signature $s_B = y - r_B b \mod (p-1)$. B sends $\{r_B, s_B, \text{text}_B\}$ to A.
3. A computes $\alpha^{s_B}(p_B)^{r_B}$ and verifies that this is equal to $r_B$. A computes the session key

$$K = (r_B)^x = \alpha^{xy}.$$

4. B computes $\alpha^{s_A}(P_A)^{r_A}$ and verifies that this is equal to $r_A$. B computes the sessin key

$$K = (r_A)^y = \alpha^{xy}.$$

Should E replace text A with text$_E$, B will compute $\alpha^{s_B}(p_E)^{r_A}$ which will not correspond with the transmitted value of $r_A$. B will thus be alerted to the interloper E and will proceed to initiate another session key.

One draw back of the first protocol is that it does not offer perfect forward secrecy. That is, if an adversary leams the long-term private key a of party A, then the adversary can deduce all of A's past session keys. The property of perfect forward secrecy can be achieved by modifying Protocol 1 in the following way.

Modified First Protocol

In step 1, A also sends $\alpha^{x_1}$ to B, where $x_1$ is a second random integer generated by A. Similarly, in step 2 above, B also sends $\alpha^{y_1}$ to A, where $y_1$ is a random integer. A and B now compute the key $K = \alpha^{xy} \oplus \alpha^{x_1 y_1}$.

Another drawback of the first protocol is that if an adversary learns the private random integer x of A, then the adversary can deduce the long-term private key a of party A from the equation $s_A = x - r_A a \mod p - 1$. This drawback is primarily theoretical in nature since a well designed implementation of the protocol will prevent the private integers from being disclosed.

Second Protocol

A second protocol set out below addresses these two drawbacks.

1. A picks a random integer x,$1 \leq x \leq p-2$, and computes $(pB)^x, \alpha^x$ and a signature $s_A = x + a(p_B)^x \mod (p-1)$. A sends $\{\alpha^x, s_A, \text{text}_A\}$ to B.
2. B picks a random integer y,$1 \leq y \leq p-2$, and computes $(p_A)^y, \alpha^y$ and a signature $s_B = y + b(p_A)^y \mod (p-1)$. B sends $\{\alpha^y, s_B, \text{text}_B\}$ to A.
3. A computes $(\alpha^y)^a$ and verifies that $\alpha^{s_B}(p_B)^{-\alpha \alpha y} = \alpha^y$.
A then computes session key $K = \alpha^{ay}(pB)^x$.
4. B computes $(\alpha^x)^b$ and verifies that $\alpha^{s_A}(p_A)^{-\alpha bx} = \alpha^x$. A then computes session key $K = \alpha^{bx}(pA)^y$.

The second protocol improves upon the first protocol in the sense that if offers perfect forward secrecy. While it is still the case that disclosure of a private random integer x allows an adversary to learn the private key a, this will not be a problem in practice because A can destroy x as soon as she uses it in step 1 of the protocol.

If A does not have an authenticated copy of B's public key then B has to transmit a certified copy of his key to B at the beginning of the protocol. In this case, the second protocol is a three-pass protocol.

The quantity $s_A$ serves as A's signature on the value $\alpha^x$ This signature has the novel property that it can only be verified by party B. This idea can be generalized to all ElGamal-like signatures schemes.

The first and second protocols above can be modified to improve the bandwidth requirements and computational efficiency of the key agreement. The modified protocols are described below as Protocol 1' and Protocol 2'. In each case, A and B will share the common key $\alpha^{s_A s_B}$.

**Protocol 1'**

1. A picks a random integer x, $1 \leq x \leq p-2$, and computes $r_A = \alpha^a$ and $s_A = x + r_A a \alpha^a \mod (p-1)$. A sends $\{r_A, \text{text}_A\}$ to B.
2. B picks a random integer y, $1 \leq y \leq p-2$, and computes $r_B = \alpha^y$ and $s_B = y + r_B b \alpha^b \mod (p-1)$. B sends $\{r_B, \text{text}_B\}$ to A.
3. A computes $K = (r_B(p_B)^{r_B \alpha^b})^{s_A}$ which is equivalent to $\alpha^{s_A s_B}$.
4. B computes $K = (r_A(p_A)^{r_A \alpha^a})^{s_B}$ which is also equivalent to $\alpha^{s_A s_B}$.

A and B thus share the common key but it will be noted that the signatures $s_A$ and $s_B$ need not be transmitted.

**Protocol 2'**

1. A picks a random integer x, $1 \leq x \leq p-2$, and computes $(p_B)^x$, $\alpha^x$ and $s_A = x + a(p_B)^x \bmod (p-1)$. A sends $\{\alpha^x, \text{text}_A\}$ to B.

2. B picks a random integer y, $1 \leq y \leq p-2$, and computes $(P_A)^y$, $\alpha^y$ and $s_B = y + b(p_A)^y \bmod (p-1)$. B sends $\{\alpha^y, \text{text}_B\}$ to A.

3. A computes $(\alpha^y)^a$ and $K = (\alpha^y (p_B)^{\alpha b \alpha xy})^{s_A}$. i.e. $\alpha^{s_A s_B}$.

4. B computes $(\alpha^x)^b$ and $K = (\alpha^x (p_A)^{\alpha a \alpha bx})^{s_B}$. i.e. $\alpha^{s_A s_B}$.

Again therefore the transmission of $s_A$ and $s_B$ is avoided.

A further protocol is available for parties A and B to establish a session key K.

Third Protocol

The system parameters for this protocol are a prime number p and a generator $\alpha$ for the multiplicative group $Z_p^{\bullet}$. User A has private key a and public key $p_A = \alpha^a$. User B has private key b and public key $p_B = \alpha^b$.

1. A picks two random integers x, $x_1$, $1 \leq x, x_1 \leq p-2$, and computes $r_{x_1} = \alpha^{x_1}$, $r_A = \alpha^x$ and $(r^A)^{r_{x_1}}$, then computes a signature $s_A = x r_{x_1} - (r_A)^{r_{x_1}} a \alpha^a$ mod (p-1). A sends $\{r_A, s_A, \alpha^{x_1}, \text{text}_A\}$ to B.

2. B picks two random integers y, $y_1$, $1 \leq y, y_1 \leq p-2$, and computes $r_{y_1} = \alpha^{y_1}$, $r_B = \alpha^y$ and $(r^B)^{r_{y_1}}$, then computes a signature $s_B = y r_{y_1} - (r_B)^{r_{y_1}} b$ mod (p-1). A sends $\{r_B, s_B, \alpha^{y_1}, \text{text}_B\}$ to A.

3. A computes $\alpha^{s_B} (p_B)^{(r_B)^{r_{y_1}}}$ and verifies that this is equal to $(r_B)^{r_{y_1}}$. A computes session key $K = (\alpha^{y_1})^{x_1} = \alpha^{x_1 y_1}$.

4. B computes $\alpha^{s_A} (p_A)^{(r_A)^{r_{x_1}}}$ and verifies that this is equal to $(r_A)^{r_{x_1}}$. B computes session key $K = (\alpha^{x_1})^{y_1} = \alpha^{x_1 y_1}$.

In these protocols, $(r_A, s_A)$ can be thought of as the signature of $r_{x_1}$ with the property that only A can sign the message $r_{x_1}$.

Key Transport Protocol

The protocols described above permit the establishment and authentication of a session key K. It is also desirable to establish a protocol in which permits A to transport a session key K to party B. Such a protocol is exemplified below.

1. A picks a random integer x, $1 \leq x \leq p-2$ and computes $r_A = \alpha^x$ and a signature $S_A = x - r_A a \alpha^a \bmod (p-1)$. A computes session key $K = (P_B)^x$ and sends $\{r_A, S_A, \text{text}_A\}$ to B.

2. B computes $\alpha^{s_A} (p_A)^{r_A \alpha_a}$ and verifies that this quantity is equal to $r_A$. B computes session key $K = (r_A)^b$.

Modified Key Transport Protocol

The above protocol may be modified to reduce the bandwidth by avoiding the need to transmit the signature $S_A$ as follows:

1. A picks a random integer x, $1 \leq x \leq p-2$, and computes $r_A = \alpha^x$ and $s_A = x - r_A a \alpha^a \bmod (p-1)$. A computes $K = (P_B)^{s_A}$ and sends $\{r_A, \text{text}_A\}$ to B.

2. B computes $K = (\alpha^x (p_A)^{-r_A \alpha_a})^b = \alpha^{b s_A}$.

All one-pass key transport protocols have the following problem of replay. Suppose that a one-pass key transport protocol is used to transmit a session key K from A to B as well as some text encrypted with the session key K. Suppose that E records the transmission from A to B. If E can at a later time gain access to B's decryption machine (but not the internal contents of the machine, such as B's private key), then, by replaying the transmission to the machine, E can recover the original text. (In this scenario, E does not learn the session key K).

This replay attack can be foiled by usual methods, such as the use of timestamps. There are, however, some practical situations when B has limited computational resources, in which it is more suitable at the beginning of each session, for B to transmit a random bit string k to A. The session key that is used to encrypt the text is then $k \oplus K$, i.e. k XOR'd with K.

The signing equation $s_A = x - r_A a \alpha^a$ where $r_A = \alpha^x$ in protocol 1, and the key transportation protocols; $r_A = \alpha^{xb}$ in protocol 2, can be replaced with several variants. Some of them are:

$$r_A = s_A x + z$$

$$s_A = x \alpha^a + a r_A$$

$$s_A = x r_A + a \alpha^a$$

$$\text{l.} = \text{ar}_A + xs_A$$

All the protocols discussed above have been described in the setting of the multiplicative group $Z_p^{\cdot}$. However, they can all be easily modified to work in any finite group in which the discrete logarithm problem appears intractable. Suitable choices include the multiplicative group of a finite filed (in particular the finite filed $GF(2^n)$, subgroups of $Z^*_p$ of order q, and the group of points on an elliptic curve defined over a finite field. In each case, an appropriate generator a will be used to define the public keys.

The protocols discussed above can also be modified in a straightforward way to handle the situation when each user picks their own system parameters p and $\alpha$ (or analogous parameters if a group other than $Z_p^{\cdot}$ is used).

In the above protocols, a signature component of the general form $S_A = x + r_a.a.\alpha^a$ has been used.

The protocols may be modified to use a simpler signature component of the general form $s_A = x + r_a.a$ without jeopardizing the security.

Examples of such protocols will be described below using the same notation although it will be understood that the protocols could be expressed in alternative notation if preferred.

**Protocol 1"**

This protocol will be described using an implementation in the multiplicative group $Z_p^{\cdot}$ with the following notation:

p is a prime number,

a is a generator of $Z_p^{\cdot}$,

a and b are party A's and B's respective long-term private key,
$\alpha^a \bmod p$ is party A's long-term public key,
$\alpha^b \bmod p$ is party B's long-term public key,
x is a random integer selected by A as a short-term private key,
$r_a = \alpha^x \bmod p$ is party A's short-term public key,
y is a random integer selected by B as a short-term private key,
$r_b = \alpha^y \bmod p$ is party B's short-term public key,

$\overline{r_a}$ is an integer derived from $r_a$ and is typically the 80 least significant bits of $r_a$,

$\overline{r_b}$ is an integer derived from $r_b$ and is typically the 80 least significant bits of $r_b$.

To implement the protocol,

1. A sends $r_a$ to B.
2. B sends $r_B$ to A.

3. A computes $s_A = x + \overline{r_a}.a \bmod (p-1)$.

4. A computes the session key K where

$$K = (\alpha^y(\alpha^b)^{\overline{r_b}})^{s_A} \bmod p.$$

5. B computes $s_B = y + \overline{r_b}.b \bmod (p-1)$.

6. B computes the session key K where

$$K = (\alpha^x(\alpha^a)^{\overline{r_a}})^{s_B} \bmod p.$$

7. The shared secret is $\alpha^{s_B s_A} \bmod p$.

In this protocol, the bandwidth requirements are again reduced by the signature components combine the short and long-term keys of the correspondent to inhibit an attack by an interloper.

The above protocol may also be implemented using a subgroup of $Z_p^{\cdot}$. In this case, q will be a prime divisor of (p-1) and g will be an element of order p in $Z_p^{\cdot}$.

A's and B's public keys will be of the form $g^a$, $g^b$ respectively and the short-term keys $r_a$, $r_b$ will be of the form $g^x$, $g^y$.

The signature components $s_A$, $s_B$ are computed mod q and the session key K computed mod q as before. The shared secret is then $g^{s_A s_B} \bmod p$.

As noted above, the protocols may be implemented in groups other than $Z_p^{\cdot}$ and a particularly robust group is the group of points on an elliptic curve over a finite field. An example of such an implementation is set out below as protocol 1'''.

**Protocol 1'''**

The following notation is used:

E is an elliptic curve defined over Fq,
P is a point of prime order n in E(Fq),
da (1<da<n-1) is party A's long-term private key,
$d_b$ (1<$d_b$<n-1) is party B's long-term private key,
$Q_a$ = daP is party A's long-term public key,
$Q_b$=$d_b$P is party B's long-term public key,
k(1<k<n-1) is party A's short-term private key,
$r_a$= kP is party A's short-term public key,
m (1<m<n-1) is party B's short-term private key,
$r_b$ = mP is party B's short-term public key,

$\overline{r_a}$ and $\overline{r_b}$ : respectively are bit strings, for example the 80 least significant bits of the x co-ordinate of $r_a$ and $r_b$.

To implement the protocol:

1. A sends $r_a$ to B.
2. B sends $r_b$ to A.

3. A computes $s_A = (k + \overline{r_a}.d_a) \bmod n.$

4. A computes the session key K where

$$K = s_a(r_b + \overline{r_b}Q_b)$$

5. B computes $s_B = (m + \overline{r_b}d_b) \bmod n.$

6. B computes the session key K where

$$K = s_b(r_a + \overline{r_a}Q_a).$$

7. The shared secret is $s_a s_b P$.

Again, it will be noted that it is not necessary to send the signature components $s_A$, $s_B$ between the correspondent but the short and long-term keys of the correspondents are combined by the form of the components. (It will be appreciated that the notation m has been substituted for x,y in the previous examples to avoid confusion with the co-ordinate (x,y) of the points on the curve).

**Claims**

1. A method of authenticating a key (20) established between a pair of correspondents (10, 12) A, B in a public key data communication system to permit exchange of information (16, 18) therebetween over a communication channel (14), each of said correspondents (10, 12) having a respective private key and a public key derived from a generator and respective ones of said private keys , said method including the steps of:

   i) a first of said correspondents A (10) selecting a first random integer and exponentiating a function including said generator to a power to provide a first exponentiated function $r_a$;
   ii) said first correspondent A (10) generating a first signature $S_A$ from said random integer and an integer $\overline{r_a}$ derived from said exponentiated function $r_a$;
   iii) said first correspondent A (10) forwarding to a second correspondent B a message derived from said first exponentiated function $r_a$;

   iv) said correspondent B (12) selecting a second random integer and exponentiating a function including said generator to a power to provide a second exponentiated function $r_b$ and generating a signature $s_B$ obtained from said second random integer and an integer $\overline{r_b}$ derived from said second exponentiated function $r_b$;
   v) said second correspondent B (12) forwarding a message to said first correspondent A derived from said second exponential function $r_b$;
   vi) each of said correspondents (10,12) constructing a session key K (20) by exponentiating information made public by the other correspondent with the signature that is private to themselves.

2. A method of claim 1 wherein said message forwarded by said first correspondent (10) includes an identification of the first correspondent.

3. A method according to claim 1 or 2 wherein said message forwarded by said second correspondent (12) includes an identification of said second correspondent (12).

4. A method according to claim 1,2 or 3 wherein said first function including said generator is said generator itself.

5. A method according to any preceding claim wherein said second function including said generator is said generator itself.

6. A method according to any preceding claim wherein said first function including said generator includes the public key of said second correspondent (12).

7. A method according to any preceding claim wherein said second function including said generator includes the public key of said first correspondent (10).

8. A method according to any preceding claim wherein said signature generated by a respective one of the correspondents (10, 12) combines the random integer, exponentiated function and private key of that one correspondent (10, 12).

9. A method according to any preceding claim wherein said information made public by another correspondent (10, 12) combines the public key, exponentiated function, and integer of that one correspondent (10,12).

10. A method according to claim 9 wherein the public key and exponentiated function are multiplied and the resultant value is exponentiated with the integer.

**11.** A method according to any preceding claim wherein the generator is an element $\alpha$ of a multiplicative group $Z_p^\bullet$ where p is a prime number.

**12.** A method according to claim 11 wherein the shared secret is $\alpha^{s_A s_B}$.

**13.** A method according to claim 11 or 12 wherein said first signature is computed from said first random integer x, said integer $\overline{r_a}$, and the private key a of said first correspondent A as

$$s_A = x + \overline{r_a} a \bmod (p-1).$$

**14.** A method according to claim 11,12, or 13 wherein said second signature $s_b$ is computed from said second random integer y, said integer $\overline{r_b}$, and the private key b of said second correspondent as

$$s_B = y + \overline{r_b} b \bmod (p-1).$$

**15.** A method according to claim 11, 12, 13, or 14 wherein said shared secret is computed by said first correspondent from the public key $\alpha^y$, exponentiated function $\alpha^b$, and integer $\overline{r_b}$ of said second correspondent B, as $K = \left( \alpha^y \left( \alpha^b \right)^{\overline{r_b}} \right)^{s_A} \bmod p$.

**16.** A method according to claim 11,12,13,14, or 15 wherein said shared secret is computed by said second correspondent from the public key $\alpha^x$, exponentiated function $\alpha^a$, and integer $\overline{r_a}$ of said first correspondent A as $K = \left( \alpha^x \left( \alpha^a \right)^{\overline{r_a}} \right)^{s_B} \bmod p$.

**17.** A method according to any one of claims 11 to 16 wherein the element a is a generator of $Z_p^\bullet$.

**18.** A method according to any one of claims 11 to 16 wherein the element a is a generator g of a subgroup of $Z_p^\bullet$ of order q, where q is a prime divisor of p-1.

**19.** A method according to any one of claims 1 to 10, wherein said generator $\alpha$ is a point P of order n on an elliptic curve defined over a finite field Fq, exponentiation is performed by scalar multiplication on said elliptic curve.

**20.** A method according to claim 19, wherein said integers are bit strings of coordinates of said exponentiated functions.

**21.** A method according to claim 20, wherein said bit strings are least significant bits of the x coordinates of said exponentiated functions.

**22.** A method according to claim 21, wherein said bit strings are the 80 least significant bits of the x coordintes of said exponentiated functions.

**23.** A method according to any one of claims 19 to 22, wherein said first signature is computed from said first random integer k, said integer $\overline{r_a}$, and the private key $d_a$ of said first correspondent A as

$$s_A = \left( k + \overline{r_a} d_a \right) \bmod n.$$

**24.** A method according to any one of claims 19 to 23, wherein said second signature is computed from said second random integer m, said integer $\overline{r_b}$, and the private key $d_b$ of said second correspondent B as $s_B = \left( m + \overline{r_b} d_b \right) \bmod n$.

**25.** A method according to any one of claims 19 to 24, wherein said first correspondent (10) computes the session key from said first signature $s_A$, said second exponentiated function $r_b$, said integer $\overline{r_b}$, and the public key $Q_b$ of said second correspondent B as

$$K = s_a \left( r_b + \overline{r_b} Q_b \right).$$

**26.** A method according to any one of claims 19 to 25, wherein said second correspondent (12) computes the session key from said second signature $s_B$, said first exponentiated function $r_a$, said integer $\overline{r_a}$, and the public key $Q_a$ of said first correspondent A as

$$K = s_b \left( r_a + \overline{r_a} Q_a \right).$$

**27.** A method according to any one of claims 19 to 26, wherein the point P is of prime order.

**Patentansprüche**

1. Verfahren zum Authentisieren eines zwischen zwei Korrespondenten (10, 12) A, B in einem Datenkommunikationssystem mit öffentlichen Schlüsseln hergestellten Schlüssels (20) zum Ermöglichen des Austausches von Informationen (16, 18) zwischen diesen über einen Kommunikationskanal (14), wobei jeder der Korrespondenten (10, 12) einen jeweiligen privaten Schlüssel und einen von einem Generator und jeweiligen der privaten Schlüssel abgeleiteten öffentlichen Schlüssel besitzt, mit den folgenden Schritten:

   i) ein erster der Korrespondenten A (10) wählt eine erste zufällige ganze Zahl und erhebt eine den Generator enthaltende Funktion zu einer Potenz, die von der ersten zufälligen ganzen Zahl abhängt, um eine erste zur Potenz erhobene Funktion $r_a$ bereitzustellen;
   ii) der erste Korrespondent A (10) erzeugt eine erste Signatur $s_A$ aus der zufälligen ganzen Zahl und einer von der zur Potenz erhobenen Funktion $r_a$ abgeleiteten ganzen Zahl $\overline{r}_a$;
   iii) der erste Korrespondent A (10) leitet eine von der ersten zur Potenz erhobenen Funktion $r_a$ abgeleitete Nachricht zu einem zweiten Korrespondenten B weiter;
   iv) der zweite Korrespondent B (12) wählt eine zweite zufällige ganze Zahl und erhebt eine den Generator enthaltende Funktion zu einer Potenz, die von der zweiten zufälligen ganzen Zahl abhängt, um eine zweite zur Potenz erhobene Funktion $r_b$ bereitzustellen, und erzeugt eine Signatur $s_B$, die aus der zweiten zufälligen ganzen Zahl und einer von der zweiten zur Potenz erhobenen Funktion $r_b$ abgeleiteten ganzen Zahl $\overline{r}_b$ erhalten wird;
   v) der zweite Korrespondent B (12) leitet eine Nachricht zu dem ersten Korrespondenten A weiter, die von der zweiten zur Potenz erhobenen Funktion $r_b$ abgeleitet wird;
   vi) jeder der Korrespondenten (10, 12) konstruiert einen Sitzungsschlüssel K (20) durch Potenzieren von Informationen, die durch einen anderen Korrespondenten veröffentlicht werden, mit seiner eigenen privaten Signatur.

2. Verfahren nach Anspruch 1, wobei die von dem ersten Korrespondenten (10) weitergeleitete Nachricht eine Identifikation des ersten Korrespondenten enthält.

3. Verfahren nach Anspruch 1 oder 2, wobei die von dem zweiten Korrespondenten (12) weitergeleitete Nachricht eine Identifikation des zweiten Korrespondenten (12) enthält.

4. Verfahren nach Anspruch 1, 2 oder 3, wobei die erste Funktion, die den Generator enthält, der Generator selbst ist.

5. Verfahren nach einem der vorhergehenden Ansprüche, wobei die zweite Funktion, die den Generator enthält, der Generator selbst ist.

6. Verfahren nach einem der vorhergehenden Ansprüche, wobei die erste Funktion, die den Generator enthält, den öffentlichen Schlüssel des zweiten Korrespondenten (12) enthält.

7. Verfahren nach einem der vorhergehenden Ansprüche, wobei die zweite Funktion, die den Generator enthält, den öffentlichen Schlüssel des ersten Korrespondenten (10) enthält.

8. Verfahren nach einem der vorhergehenden Ansprüche, wobei die von einem jeweiligen der Korrespondenten (10, 12) erzeugte Signatur die zufällige ganze Zahl, die potenzierte Funktion und den privaten Schlüssel dieses einen Korrespondenten (10, 12) kombiniert.

9. Verfahren nach einem der vorhergehenden Ansprüche, wobei die von einem anderen Korrespondenten (10, 12) veröffentlichten Informationen den öffentlichen Schlüssel, die potenzierte Funktion und die ganze Zahl dieses einen Korrespondenten (10, 12) kombinieren.

10. Verfahren nach Anspruch 9, wobei der öffentliche Schlüssel und die potenzierte Funktion multipliziert werden und der resultierende Wert mit der ganzen Zahl potenziert wird.

11. Verfahren nach einem der vorhergehenden Ansprüche, wobei der Generator ein Element $\alpha$ einer multiplikativen Gruppe $Z_p^*$ ist, wobei $p$ eine Primzahl ist.

12. Verfahren nach Anspruch 11, wobei das gemeinsame Geheimnis $\alpha^{s_A s_B}$ ist.

13. Verfahren nach Anspruch 11 oder 12, wobei die erste Signatur aus der ersten zufälligen ganzen Zahl x, der ganzen Zahl $\overline{r}_a$ und dem privaten Schlüssel a des ersten Korrespondenten A gemäß $S_A = x + \overline{r}_a a$ mod ($p$ - 1) berechnet wird.

14. Verfahren nach Anspruch 11, 12 oder 13, wobei die zweite Signatur $s_b$ aus der zweiten zufälligen ganzen Zahl y, der ganzen Zahl $r_b$ und dem privaten Schlüssel b des zweiten Korrespondenten gemäß $s_B = y + \overline{r}_b b$ mod$(p$ - 1) berechnet wird.

**15.** Verfahren nach Anspruch 11, 12, 13 oder 14, wobei das gemeinsame Geheimnis durch den ersten Korrespondenten aus dem öffentlichen Schlüssel $\alpha^y$, der potenzierten Funktion $\alpha^b$ und der ganzen Zahl $\overline{r}_b$ des zweiten Korrespondenten B gemäß

$$K = \left(\alpha^y \left(\alpha^b\right)^{\overline{r}_b}\right)^{s_A} \mathrm{mod}\, p \text{ berechnet wird.}$$

**16.** Verfahren nach Anspruch 11, 12, 13, 14 oder 15, wobei das gemeinsame Geheimnis durch den zweiten Korrespondenten aus dem öffentlichen Schlüssel $\alpha^x$, der potenzierten Funktion $\alpha^a$ und der ganzen Zahl $\overline{r}_a$ des ersten Korrespondenten A gemäß

$$K = \left(\alpha^x \left(\alpha^a\right)^{\overline{r}_a}\right)^{s_B} \mathrm{mod}\, p \text{ berechnet wird.}$$

**17.** Verfahren nach einem der Ansprüche 11 bis 16, wobei das Element $\alpha$ ein Generator von $Z_p^*$ ist.

**18.** Verfahren nach einem der Ansprüche 11 bis 16, wobei das Element $\alpha$ ein Generator g einer Untergruppe von $Z_p^*$ der Ordnung q ist, wobei q ein Primdivisor von p-1 ist.

**19.** Verfahren nach einem der Ansprüche 1 bis 10, wobei der Generator $\alpha$ ein Punkt P der Ordnung n auf einer über einem Galoisfeld Fq definierten elliptischen Kurve ist, Potenzierung wird durch Skalarmultiplikation auf der elliptischen Kurve durchgeführt.

**20.** Verfahren nach Anspruch 19, wobei die ganzen Zahlen Bitketten von Koordinaten der potenzierten Funktionen sind.

**21.** Verfahren nach Anspruch 20, wobei die Bitketten niedrigstwertige Bit der x-Koordinaten der potenzierten Funktionen sind.

**22.** Verfahren nach Anspruch 21, wobei die Bitketten die 80 niedrigstwertigen Bit der x-Koordinaten der potenzierten Funktionen sind.

**23.** Verfahren nach einem der Ansprüche 19 bis 22, wobei die erste Signatur aus der ersten zufälligen ganzen Zahl k, der ganzen Zahl $\overline{r}_a$ und dem privaten Schlüssel $d_a$ des ersten Korrespondenten A gemäß $s_A = (k + \overline{r}_a d_a) \mathrm{mod}\, n$ berechnet wird.

**24.** Verfahren nach einem der Ansprüche 19 bis 23, wobei die zweite Signatur aus der zweiten zufälligen ganzen Zahl m, der ganzen Zahl $\overline{r}_b$ und dem privaten Schlüssel $d_b$ des zweiten Korrespondenten B gemäß $s_B = (m + \overline{r}_b d_b) \mathrm{mod}\, n$ berechnet wird.

**25.** Verfahren nach einem der Ansprüche 19 bis 24, wobei der erste Korrespondent (10) den Sitzungsschlüssel aus der ersten Signatur $s_A$, der zweiten potenzierten Funktion $r_b$, der ganzen Zahl $\overline{r}_b$ und dem öffentlichen Schlüssel $Q_b$ des zweiten Korrespondenten B gemäß $K = s_\alpha(r_b + \overline{r}_b Q_b)$ berechnet.

**26.** Verfahren nach einem der Ansprüche 19 bis 25, wobei der zweite Korrespondent (12) den Sitzungsschlüssel aus der zweiten Signatur $s_B$, der ersten potenzierten Funktion $r_a$, der ganzen Zahl $\overline{r}_a$ und dem öffentlichen Schlüssel $Q_a$ des ersten Korrespondenten A gemäß $K = s_b(r_a + \overline{r}_a Q_a)$ berechnet.

**27.** Verfahren nach einem der Ansprüche 19 bis 26, wobei der Punkt P eine prime Ordnung aufweist.

## Revendications

**1.** Procédé d'authentification d'une clé (20) établie entre deux correspondants (10, 12) A, B dans un système de communications de données à clé publique pour permettre l'échange d'informations (16, 18) entre eux par un canal de communications (14), chacun des correspondants (10, 12) ayant une clé privée respective et une clé publique dérivée d'un générateur et des clés respectives parmi les clés privées, le procédé comprenant les étapes suivantes :

   i) un premier des correspondants A (10) sélectionne un premier entier aléatoire et crée une fonction exponentielle contenant le générateur à une puissance qui dépend du premier entier aléatoire pour donner une première fonction exponentielle $r_a$,
   ii) le premier correspondant A (10) crée une première signature $s_A$ à partir de l'entier aléatoire et d'un entier $\overline{r}_a$ dérivé de la fonction exponentielle $r_a$,
   iii) le premier correspondant A (10) envoie à un second correspondant B un message dérivé de la première fonction exponentielle $r_a$,
   iv) le second correspondant B (12) sélectionne un second entier aléatoire et crée une fonction exponentielle comprenant le générateur à une puissance qui dépend du second entier aléatoire pour former une seconde fonction exponentielle $r_b$ et crée une signature $s_B$ obtenue à partir du second entier aléatoire et d'un entier $\overline{r}_a$ dérivé de la seconde fonction exponentielle $r_b$,
   v) le second correspondant B (12) transmet un message au premier correspondant A, dérivé de la seconde fonction exponentielle $r_b$, et
   vi) chacun des correspondants (10, 12) construit une clé de session K (20) par création exponentielle d'informations rendues publiques par un autre correspondant avec la signature privée propre à ces correspondants.

2. Procédé selon la revendication 1, dans lequel le message transmis par le premier correspondant (10) comprend une identification du premier correspondant.

3. Procédé selon la revendication 1 ou 2, dans lequel le message transmis par le second correspondant (12) comprend une identification du second correspondant (12).

4. Procédé selon la revendication 1, 2 ou 3, dans lequel la première fonction comprenant le générateur est le générateur lui-même.

5. Procédé selon l'une quelconque des revendications précédentes, dans lequel la seconde fonction comprenant le générateur est le générateur lui-même.

6. Procédé selon l'une quelconque des revendications précédentes, dans lequel la première fonction comprenant le générateur comporte la clé publique du second correspondant (12).

7. Procédé selon l'une quelconque des revendications précédentes, dans lequel la seconde fonction comprenant le générateur comporte la clé publique du premier correspondant (10) .

8. Procédé selon l'une quelconque des revendications précédentes, dans lequel la signature créée par un correspondant respectif parmi les correspondants (10, 12) combinent l'entier aléatoire, la fonction exponentielle et la clé privée de ce correspondant (10, 12).

9. Procédé selon l'une quelconque des revendications précédentes, dans lequel les informations rendues publiques par un autre correspondant (10, 12) combinent la clé publique, la fonction exponentielle et l'entier de ce correspondant (10, 12).

10. Procédé selon la revendication 9, dans lequel la clé publique et la fonction exponentielle sont multipliées et la valeur résultante est mise en exposant par l'entier.

11. Procédé selon l'une quelconque des revendications précédentes, dans lequel le générateur est un élément $\alpha$ d'un groupe multiplicateur $Z^*_p$, p étant un nombre premier.

12. Procédé selon la revendication 11, dans lequel le secret partagé est $\alpha^{s_A s_B}$.

13. Procédé selon la revendication 11 ou 12, dans lequel la première signature est calculée à partir du premier entier aléatoire x, de l'entier $\overline{r_a}$ et de la clé privée a du premier correspondant A sous la forme

$$s_A = x + \overline{r_a}\, a \bmod (p - 1).$$

14. Procédé selon la revendication 11, 12 ou 13, dans lequel la seconde signature $s_b$ est calculée à partir du second entier aléatoire y, de l'entier $\overline{r_b}$ et de la clé privée b du second correspondant sous la forme

$$s_B = y + \overline{r_b}\, b \bmod (p - 1).$$

15. Procédé selon la revendication 11, 12, 13 ou 14, dans lequel le secret partagé est calculé par le premier correspondant à partir de la clé publique $a^y$, de la fonction exponentielle $\alpha^b$, et de l'entier $\overline{r_b}$ du second correspondant B, sous la forme

$$K = \left(\alpha^y \left(\alpha^b\right)^{\overline{r_b}}\right)^{s_A} \bmod p.$$

16. Procédé selon la revendication 11, 12, 13, 14 ou 15, dans lequel le secret partagé est calculé par le second correspondant à partir de la clé publique $\alpha^x$, de la fonction exponentielle $\alpha^a$ et de l'entier $\overline{r_a}$ du premier correspondant A sous la forme

$$K = \left(\alpha^x \left(\alpha^a\right)^{\overline{r_a}}\right)^{s_B} \bmod p.$$

17. Procédé selon l'une quelconque des revendications 11 à 16, dans lequel l'élément $\alpha$ est un générateur de $Z^*_p$.

18. Procédé selon l'une quelconque des revendications 11 à 16, dans lequel l'élément $\alpha$ est un générateur g d'un sous-groupe de $Z^*_p$ d'ordre q, q étant un diviseur premier de p - 1.

19. Procédé selon l'une quelconque des revendications 1 à 10, dans lequel le générateur $\alpha$ est un point P d'ordre n sur une courbe elliptique définie dans un champ fini Fq, et la mise en exponentielle est exécutée par multiplication scalaire sur la courbe elliptique.

20. Procédé selon la revendication 19, dans lequel les entiers sont des chaînes de bits de coordonnées des fonctions exponentielles.

21. Procédé selon la revendication 20, dans lequel les chaînes de bits sont les bits les moins significatifs des coordonnées x des fonctions exponentielles.

**22.** Procédé selon la revendication 21, dans lequel les chaînes de bits sont les 80 bits les moins significatifs des coordonnées x des fonctions exponentielles.

**23.** Procédé selon l'une quelconque des revendications 19 à 22, dans lequel la première signature est calculée à partir du premier entier aléatoire k, de l'entier $\overline{r_a}$ et de la clé privée $d_a$ du premier correspondant A sous la forme $s_A = \left(k + \overline{r_a}d_a\right) \bmod n$.

**24.** Procédé selon l'une quelconque des revendications 19 à 23, dans lequel la seconde signature est calculée à partir du second entier aléatoire m, de l'entier $\overline{r_b}$ et de la clé privée $d_b$ du second correspondant B sous la forme $s_B = \left(m + \overline{r_b}d_b\right) \bmod n$.

**25.** Procédé selon l'une quelconque des revendications 19 à 24, dans lequel le premier correspondant (10) calcule la clé de session à partir de la première signature $S_A$, de la seconde fonction exponentielle $r_b$, de l'entier $\overline{r_b}$ et de la clé publique $Q_b$ du second correspondant B sous la forme $K = s_a\left(r_b + \overline{r_b}Q_b\right)$.

**26.** Procédé selon l'une quelconque des revendications 19 à 25, dans lequel le second correspondant (12) calcule la clé de session à partir de la première signature $s_B$, de la seconde fonction exponentielle $r_b$, de l'entier $\overline{r_a}$ et de la clé publique $Q_a$ du premier correspondant A sous la forme $K = s_b\left(r_a + \overline{r_a}Q_a\right)$.

**27.** Procédé selon l'une quelconque des revendications 19 à 26, dans lequel le point P est d'ordre premier.

FIG. 1